# EUROPEAN PATENT APPLICATION

(11) **EP 3 779 409 A1**
(43) Date of publication of application: **17.02.2021**
(21) Application number: 18913762.3
(22) Date of filing: 27.11.2018
(51) Int. Cl.: G01N 21/64, G01N 21/78

(54) **WEAK LIGHT DETECTION SYSTEM AND WEAK LIGHT DETECTION METHOD**

(30) Priority: 03.04.2018 JP 2018071968; 08.11.2018 JP 2018210162
(71) Applicant: Photo Medical Limited Liability Company, Kyoto-shi, Kyoto 604-8143 (JP)
(72) Inventor: MURAI, Hiromichi, Kyoto-shi, Kyoto 604-8143 (JP); YAMAMOTO Takashi, Kyoto-shi, Kyoto 604-8143 (JP)
(74) Representative: Müller-Boré & Partner Patentanwälte PartG mbB
(86) International application number: PCT/JP2018/043598
(87) International publication number: WO 2019/193784

(57) **Abstract**

There are provided a weak light detection system and a weak light detection method that allow detection of target weak light at a high signal-to-noise ratio with a simple configuration.

A weak light detection system includes an excitation light radiator that irradiates a test piece with excitation light in an excitation light radiation pattern modulated by an error correction code sequence provided by applying an error correction code coding scheme to a predetermined transmitted information sequence, a light receiver that receives light stimulated by the excitation light at the test piece, a received code sequence identifier that identifies a received code sequence based on a change in the intensity of the light received by the light receiver, and a signal processor that applies an error correction code decoding scheme to the received code sequence to generate a decoded information sequence, compares the transmitted information sequence with the decoded information sequence, and determines that the test piece has emitted light according to the excitation light radiation pattern in a case where the transmitted information sequence coincides with the decoded information sequence.

## Description

### Technical Field

The present invention relates to a weak light detection system and a weak light detection method for detecting weak light stimulated by excitation light.

### Background Art

At medical sites, such as hospitals, clinics, nursing facilities, and home care, there is increasing necessity of a test for diagnosis at a location as close as possible to a patient with no clinical test expert, that is, point of care testing (POCT). The reason for this is that POCT allows a quick, proper treatment based on immediately provided test information. An immunochromatograph based on immunochromatography has been used as a tester for POCT.

In immunochromatography, when an analysis target (sample), such as collected blood, urine, and diseased tissue, penetrates into a test piece formed of a porous support due to capillarity, the sample binds to a labeled antibody, which is an antibody labeled by gold colloid, colored latex, a fluorescent substance or the like, and the resultant immune complex further binds to a linear capturing antibody fixed onto a membrane. The resultant final immune complex, after binding to the capturing antibody, allows detection of a substance under test to which the label has been attached in the form of a visually recognized or visible aggregation. Immunochromatography allows quick evaluation (shorter than or equal to 20 minutes), whereby the test can be quickly performed only with simple operation of dropping a sample into the immunochromatograph.

As a method capable of the evaluation with higher sensitivity than visual evaluation, there is a method for detecting fluorescence emitted from a fluorescent label by using what is called a fluorescence immunochromatographic reader. A fluorescence immunochromatographic reader irradiates a test piece with excitation light to sense immune complex after binding to a capturing antibody. In this process, in a case where a sample has been captured and immune complex has been formed, the excitation light causes emission of fluorescence from a fluorescent label, and a detector detects the intensity of the fluorescence. In the case of the thus configured fluorescence immunochromatographic reader, irradiation of the sample with the excitation light causes not only fluorescence from the fluorescent label having formed the immune complex but also autofluorescence from the porous support and unnecessary fluorescence from the fluorescent label or the like that is present in the test piece but forming no immune complex. The fluorescence from the substances other than the immune complex, which forms background noise and therefore lowers the signal-to-noise ratio of the fluorescence from the fluorescent label, hinders an attempt to detect a further minute amount of substance under test.

To improve the signal-to-noise ratio, for example, there have been proposed methods, such as time-resolving fluorescence measurement using a substance that emits phosphorescence and a method for removing autofluorescence from the porous support with the aid of a filter capable of removing light that belongs to a limited wavelength region, such as a bandpass filter, placed in front of a sensor. Further, Patent Literature 1 proposes an approach using a color sensor as fluorescence detection means.

### Citation List

### Patent Literature

Patent Literature 1: Japanese Patent Laid-Open No. 2016-191567

### Summary of Invention

### Technical Problem

As described above, measures have been taken to remove autofluorescence and fluorescence having the same wavelength as that of light under detection, such as residual fluorescence, but even if these noises are reduced, other types of noise, such as noise inside the detector and the apparatus and external noise, are left and prevent the improvement of the signal-to-noise ratio and the detection of a minute amount of substance under test. The same problem similarly occurs in an attempt to improve the signal-to-noise ratio and, in turn, improve the detection limit in other measurement methods in which a fluorescent substance is used as a label to detect a substance under test (ELISA, flow cytometry, for example). Further, the same problem is not limited to fluorescence measurement and occurs also in a measurement method for observing light stimulated by excitation light, for example, Raman spectroscopy using Raman scattered light.

An object of the present invention is to eliminate the problem with the related-art technologies and provide a weak light detection system and a weak light detection method capable of high signal-to-noise-ratio detection of weak light stimulated by excitation light.

### Solution to Problem

To achieve the object described above, a weak light detection system according to an embodiment of the present invention includes an excitation light radiator that irradiates a test piece with excitation light in an excitation light radiation pattern modulated by an error correction code sequence provided by applying an error correction code coding scheme to a predetermined transmitted information sequence, a light receiver that receives light stimulated by the excitation light at the test piece, a received code sequence identifier that identifies a received code sequence based on a change in an intensity of the light received by the light receiver, and a signal processor that applies an error correction code decoding scheme to the received code sequence to generate a decoded information sequence, compares the transmitted information sequence with the decoded information sequence, and determines that the test piece has emitted light according to the excitation light radiation pattern in a case where the transmitted information sequence coincides with the decoded information sequence. The "light stimulated by the excitation light at the test piece" includes, for example, fluorescence, Raman scattered light, and phosphorescence.

In the present invention, the weak light detection system may further include an error correction code generator that generates the error correction code sequence by applying the error correction code coding scheme to the transmitted information sequence to add a redundant bit.

The weak light detection system may further include a spread coder that spreads the error correction code sequence by using a spread code. In this case, the excitation light radiator may irradiate the test piece with the excitation light in an excitation light radiation pattern produced by the spread coder's spreading of the error correction code sequence with the spread code. Further, the spread coder may perform inverse spreading using the spread code on a signal output from the light receiver, and the received code sequence identifier may identify the received code sequence based on the signal output from the light receiver and inversely spread by the spread coder.

In the present invention, the weak light detection system may further include an estimator that estimates an amount of a substance under test or a substance to be excited contained in the test piece based on the intensity of the light received by the light receiver in a case where the signal processor determines that light emission has occurred.

A weak light detection method according to another embodiment of the present invention includes the steps of irradiating a test piece with excitation light in an excitation light radiation pattern modulated by an error correction code sequence provided by applying an error correction code coding scheme to a predetermined transmitted information sequence, receiving light stimulated by the excitation light at the test piece, identifying a received code sequence based on a change in an intensity of the light received in the light reception step, applying an error correction code decoding scheme to the received code sequence to generate a decoded information sequence, and comparing the transmitted information sequence with the decoded information sequence and determining that the test piece has emitted light according to the excitation light radiation pattern in a case where the transmitted information sequence coincides with the decoded information sequence.

In the present invention, the method may further include the step of generating the error correction code sequence by applying the error correction code coding scheme to the transmitted information sequence to add a redundant bit.

In the weak light detection method, in the irradiation step, the test piece may be irradiated with the excitation light in an excitation light radiation pattern produced by spreading of the error correction code sequence with a spread code. In this case, the method may further include the step of performing inverse spreading using the spread code on a signal based on the change in the intensity of the light received in the light reception step, and in the step of identifying the received code sequence, the received code sequence may be identified based on the signal inversely spread in the step of performing the inverse spreading.

In the present invention, the method may further include the step of estimating an amount of a substance under test or a substance to be excited contained in the test piece based on the intensity of the light received in the light reception step in a case where it is determined in the determination step that light emission has occurred.

### Brief Description of Drawings

[Figure 1] Figure 1 is a diagrammatic view showing the exterior appearance of a fluorescence detection system 1.
[Figure 2] Figure 2 shows an example of a simple configuration of the interior of the fluorescence detection system 1.
[Figure 3] Figure 3 is a functional block diagram showing the configuration of a control section 15.
[Figure 4] Figure 4 is a diagrammatic view showing the configuration of a test piece 2.
[Figure 5] Figure 5 is a flowchart showing the procedure of the action of the fluorescence detection system 1.
[Figure 6] Figure 6 is a functional block diagram showing the configuration of a control section 15A in a variation of the embodiment.

### Description of Embodiments

A fluorescence detection system 1 according to an embodiment of the present invention will be described below with reference to the drawings. The fluorescence detection system 1 detects fluorescence stimulated by excitation light. The fluorescence detection system 1 in the present embodiment is what is called a fluorescence immunochromatographic reader, which is a measurement apparatus based on immunochromatography using a fluorescent substance in a form of labeled antibody.

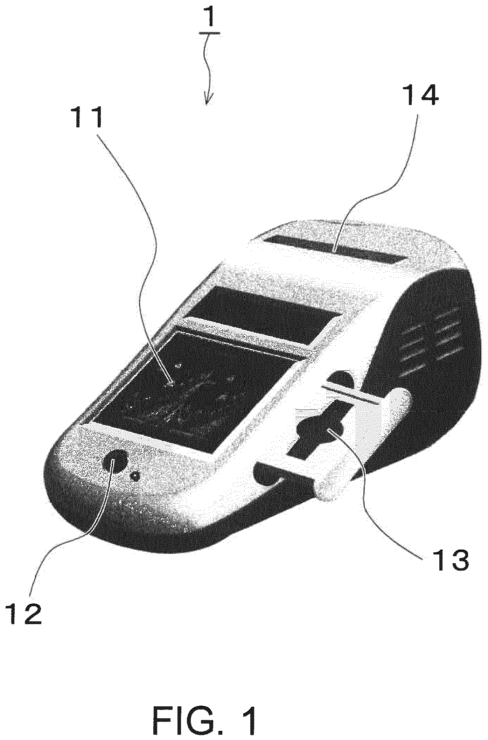

Figure 1 is a diagrammatic view showing the exterior appearance of the fluorescence detection system 1. The fluorescence detection system 1 includes a display section 11, an operation section 12, an insertion section 13, and a print section 14, as shown in Figure 1.

The display section 11 displays, for example, a result of the measurement under the control of a control section 15. A liquid crystal display may, for example, be used as the display section 11. The operation section 12 is input means that allows an operator to operate the fluorescence detection system 1. The operation section 12 may be a physical switch, such as a push button switch, or a touch panel display achieved in cooperation with the display section 11 by using a touch panel overlaid on the display section 11. The insertion section 13 is an insertion port into which a test piece 2 is inserted. The insertion section 13 may, for example, be so configured as to have a tray-like shape that is attachable to and detachable from an enclosure of the fluorescence detection system 1 and is provided with a recess that accords with the outer diameter of the test piece 2 and further so configured as to allow the test piece 2 to be inserted to an appropriate position in the fluorescence detection system 1 when the insertion section 13 is attached to the enclosure with the test piece 2 fit into the recess. The print section 14 is a printer that prints a result of the measurement under the control of the control section 15 and may, for example, be a thermal or ink-jet printer.

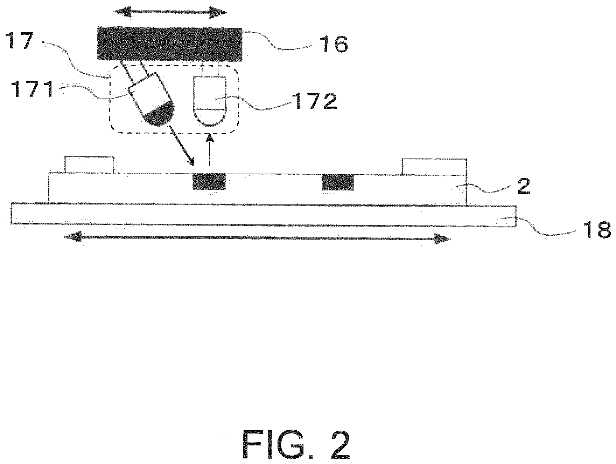

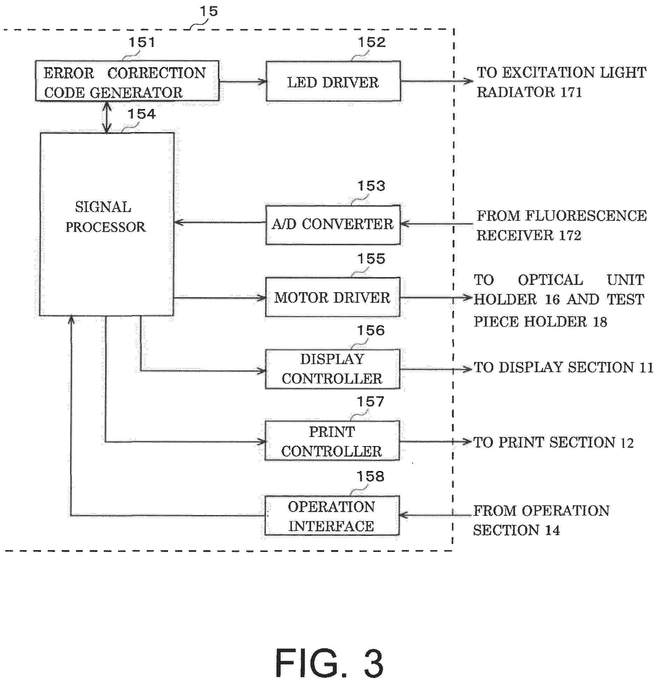

Figure 2 shows an example of a simple configuration of the interior of the fluorescence detection system 1, and Figure 3 is a functional block diagram showing the configuration of the control section 15. The fluorescence detection system 1 includes the control section 15, an optical unit holder 16, an optical unit 17, and a test piece holder 18, as shown in Figure 2.

The optical unit holder 16 holds the optical unit 17 in the fluorescence detection system 1. The optical unit holder 16 includes a motor (not shown) and moves the optical unit 17 relative to the test piece holder 18 under the control of the control section 15.

The test piece holder 18 holds the test piece 2 inserted via the insertion section 13 in a position facing the optical unit 17 in the fluorescence detection system 1. The test piece holder 18 includes a motor (not shown) and moves the test piece 2 relative to the optical unit 17 under the control of the control section 15. The positional relationship between the optical unit 17 and the test piece 2 can be changed in the longitudinal direction of the test piece by the motors provided in the optical unit holder 16 and the test piece holder 18. One or both of the optical unit 17 and the test piece 2 may be moved, and no restriction is imposed on which of them is or are actually moved.

The optical unit 17 includes an excitation light radiator 171 and a fluorescence receiver 172. The excitation light radiator 171 is a light source that emits excitation light having a wavelength capable of stimulating fluorescence from a fluorescent label and is a light emitting diode (LED) in the present embodiment. The excitation light radiator 171 radiates the excitation light intermittently in an excitation light radiation pattern modulated by using an error correction code sequence generated by an error correction code generator 151 provided in the control section 15. The excitation light radiator 171 may be a light emitting element (laser diode, for example) capable of intermittent radiation in a modulated pattern instead of an LED. The excitation light radiator 171 may still instead have a configuration in which a light source having a difficulty in intermittent radiation, such as a mercury lamp, a halogen lamp, and a xenon lamp, is combined with a member capable of blocking the radiated light, such as a chopper and a shutter, for intermittent radiation of the excitation light in a modulated pattern. The excitation light radiator 171 preferably includes a filter that transmits only a specific wavelength component suitable for the excitation of a fluorescent label out of the light emitted from the excitation light radiator 171.

The fluorescence receiver 172 includes a light receiving element that receives the stimulated fluorescence. The light receiving element is preferably, for example, a photomultiplier tube (PMT), an avalanche photo diode (APD), a photodiode (PD), or a multi-pixel photon counter (MPPC). Using any of the high-sensitivity light receiving elements described above as the fluorescence receiver 172 allows detection of weak fluorescence that cannot be visually sensed and fluorescence having a wavelength that belongs to a non-visible range. The fluorescence receiver 172, which is capable of quantitative measurement of the intensity of the detected fluorescence, further allows quantitative measurement of a target substance. The fluorescence receiver 172 outputs an analog signal representing the intensity of received light to an A/D converter 153 in the control section 15.

The control section 15 is responsible for the control of each section of the fluorescence detection system 1. The control section 15 includes the error correction code generator 151, an LED driver 152, the A/D converter 153, a signal processor 154, and a motor driver 155, as shown in Figure 3. The control section 15 includes, in addition to the above, a display controller 156, which controls the display section 11 to cause it to display a result of the measurement and display an operation interface, a print controller 157, which controls the print section 14 to cause it to print a result of the measurement, and an operation interface 158, which accepts input operation performed on the operation section 12.

The error correction code generator 151 applies a predetermined error correction code coding scheme to a transmitted information sequence to add a redundant bit to generate and output an error correction code sequence. The error correction code coding scheme can be an arbitrary scheme, such as block coding including turbo coding, Reed-Solomon coding, humming coding, and BCH coding, coding using maximum likelihood decoding (Viterbi coding), convolution coding, such as Wyner-Ash coding, and it is preferable to use a coding scheme capable of high coding gain (turbo coding, Reed-Solomon coding, and Viterbi coding, for example). The transmitted information sequence may be a fixed information sequence or a dynamically varying information sequence, for example, a random information sequence. The error correction code generator 151 provides the LED driver 152 with the generated error correction code sequence. The error correction code generator 151 further provides the signal processor 154 with transmitted information sequence before coded.

The LED driver 152 drives the LED that forms the excitation light radiator 171. The LED driver 152 causes the LED in the excitation light radiator 171 to blink in an excitation light radiation pattern modulated by using the error correction code sequence generated by the error correction code generator 151. That is, the LED driver 152 sequentially switches a target bit to another on a predetermined modulation cycle basis from the first bit to the last bit of the error correction code sequence and causes the LED to turn on or off in accordance with the value of the target bit to cause the LED in the excitation light radiator 171 to blink. The LED driver 152 performs the modulation at a rate that allows the excitation light radiator 171, a labeling substance in the test piece 2, and the fluorescence receiver 172 to respond.

The A/D converter 153 receives the analog signal representing the intensity of received light from the fluorescence receiver 172, converts the analog signal into a digital signal, and supplies the signal processor 154 with the digital signal as a received code sequence. The A/D converter 153 is an example of a received code sequence identifier in the present invention and identifies the received code sequence based on a change in the intensity of the received fluorescence. The A/D converter 153 performs the A/D conversion at a rate equal to or higher than the modulation rate at which the LED driver 152 operates.

The signal processor 154 receives the received code sequence from the A/D converter 153 and applies an error correction code decoding scheme to the received code sequence to perform decoding to generate a decoded information sequence. In a case where the received code sequence contains no error with respect to the error correction code sequence or a case where a contained error is correctable, the decoded information sequence coincides with the transmitted information sequence. The signal processor 154 compares the decoded information sequence with the transmitted information sequence received from the error correction code generator 151. In a case where the decoded information sequence coincides with the transmitted information sequence, the signal processor 154 outputs a signal representing a measurement result showing that fluorescence according to the excitation light has been emitted (that is, sample contains substance under test). The signal processor 154 may be formed, for example, of a digital signal processor (DSP).

The motor driver 155 drives and controls the motors provided in the optical unit holder 16 and the test piece holder 18.

The test piece 2, which is a target to be measured by the fluorescence detection system 1 configured described above, is not limited to a specific test piece and only needs to be a test piece used in a typical immunochromatography test method as long as the test piece contains a fluorescent substance as the labeling substance. Further, a variety of materials used to form the test piece only need to each be a typical material.

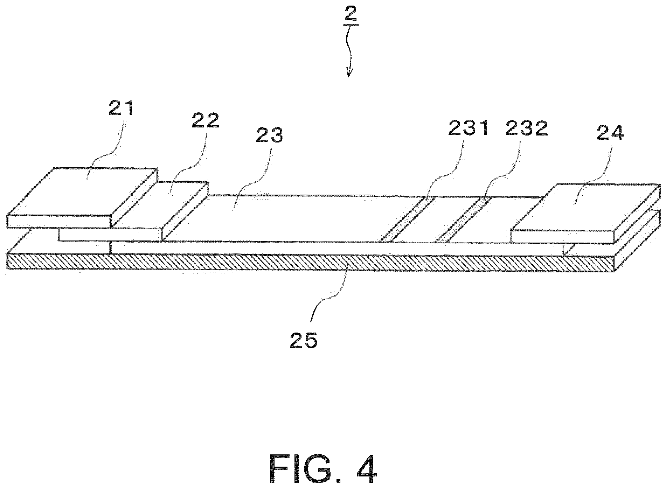

For example, the test piece 2 is formed of a sample pad 21, a conjugate pad 22, a membrane 23, an absorption pad 24, and a support (backing sheet) 25, as shown in Figure 4.

The sample pad 21 is a portion onto which a sample collected, for example, from a patient is dropped. The sample is dropped directly or via a dropper, a dropping tube, or any other tool. The sample supplied onto the sample pad 21 moves to the conjugate pad 22 based on capillarity.

A labeling substance is immersed in the conjugate pad 22 and binds to the labeling substance under test (antigen) in the sample having moved from the sample pad 21, and the resultant substance passes through the conjugate pad and moves onto the membrane 23. Examples of a fluorescent substance used as the labeling substance may include europium, terbium, and fluorescein but not limited thereto.

The following portions are provided on the membrane 23: a sample line 231 having a capturing antibody applied thereon that captures the substance under test contained in the sample based on an antigen-antibody reaction, and a control line 232, which allows the operator to check if the sample has moved beyond the sample line 231 and developed on the membrane. The absorption pad 24 is a pad that absorbs and holds the sample having passed through the membrane 23. The support 25 is a base that holds the sample pad 21, the conjugate pad 22, the membrane 23, and the absorption pad 24 from the rear side.

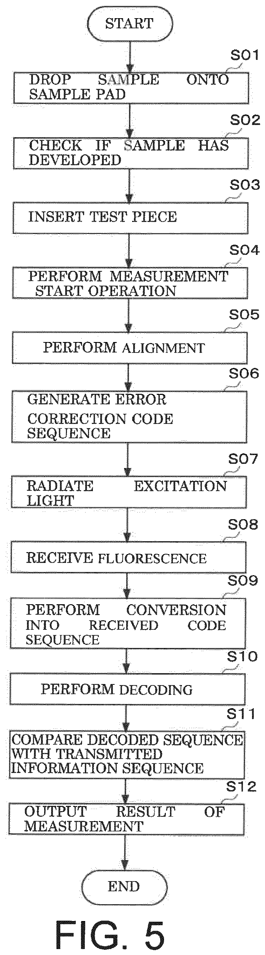

The action of the thus configured fluorescence detection system 1 and how to use the fluorescence detection system 1 will subsequently be described. Figure 5 is a flowchart showing the procedure of a fluorescence detection method using the fluorescence detection system 1.

Before the measurement performed by the fluorescence detection system 1, a doctor, a nurse, or any other operator collects a sample from a subject. The sample collected from the subject is then dropped onto the sample pad 21 of the test piece 2 (step S01). After checking if the control line 232 changes its color, which means that the sample has moved beyond the sample line 231 and developed on the membrane 23 (step S02), the operator inserts the test piece 2 into the insertion section 13 (step S03). The operator then operates the operation section 12 to start the measurement (step S04).

When the measurement starts, the control section 15 causes the motor driver 155 to drive the motors to perform alignment of causing the position of the optical unit 17 to face the position where the sample line 231 of the test piece 2 is provided (step S05).

The error correction code generator 151 subsequently applies a predetermined coding scheme to the transmitted information sequence to add a redundant bit to generate and output an error correction code sequence (step S06). At this point, the transmitted information sequence is sent to the signal processor 154, and the error correction code sequence is sent to the LED driver 152. The LED driver 152 then drives the LED, which is the light source of the excitation light radiator 171, to cause the LED to irradiate an area containing the sample line 231 of the test piece 2 with the excitation light that blinks in accordance with an excitation light radiation pattern modulated by the error correction code sequence.

When the test piece 2 is irradiated with the excitation light, no fluorescence is emitted in accordance with the blinking of the excitation light in a case where no substance under test has been captured by the sample line 231 of the test piece 2, whereas fluorescence is emitted in accordance with the blinking of the excitation light in a case where the substance under test has been captured by the sample line 231.

The fluorescence receiver 172 receives the fluorescence emitted from the test piece 2 in accordance with the blinking of the excitation light and outputs an analog signal according to the intensity of received light to the A/D converter 153 (step S07). The A/D converter 153 converts the analog signal according to the intensity of received light into a digital signal and supplies the signal processor 154 with the digital signal as a received code sequence (step S08).

The signal processor 154 decodes the received code sequence to generate a decoded information sequence (step S09). The signal processor 154 then compares the decoded information sequence with the transmitted information sequence received from the error correction code generator 151 (step S10), and in a case where the two sequences coincide with each other, the signal processor 154 outputs a signal representing a measurement result showing that fluorescence according to the excitation light has been emitted (that is, sample contains substance under test). In accordance with the measurement result, the display section 11 displays the measurement result, and the print section 14 prints the measurement result (step S11).

In the fluorescence detection system 1 and the fluorescence detection method according to the present invention described above, when the signal processor 154 performs the decoding to generate a decoded information sequence, in a case where an error contained in the received code sequence is correctable, a decoded information sequence that coincides with the transmitted information sequence is generated. As a result, even in a case where the amount of substance under test captured by the sample line 231 of the test piece 2 is very minute and the intensity of the fluorescence is therefore so weak that the received code sequence is contaminated with an error due to noise, the emission of fluorescence (that is, sample's inclusion of substance under test) can be sensed as long as the error is correctable.

Since fluorescence weak enough to be buried in noise is detectable as described above, the fluorescence detection system 1 and the fluorescence detection method according to the present invention allow detection of a very minute amount of substance under test. Therefore, for example, in a case where the substance under test is so characterized in that it proliferates over time after infection, the substance under test can be detected in an initial stage after the infection. Further, the amount of collected sample can be smaller than in related art.

As described above, the fluorescence detection system 1 and the fluorescence detection method according to the present invention allow detection of a target fluorescent label at a high signal-to-noise ratio with a simple configuration.

### [Variation of embodiment]

In the embodiment described above, the excitation light radiator 171 irradiates the test piece 2 with the excitation light in an excitation light radiation pattern modulated by an error correction code sequence itself. The excitation light radiator 171 may instead irradiate the test piece 2 with the excitation light in an excitation light radiation pattern produced by spreading the error correction code sequence with a spread code. In this case, inverse spreading using the same spread code as that applied to the error correction code sequence may be performed on the signal output from the fluorescence receiver 172, and the A/D converter 153 may then convert the result of the inverse spreading into a digital signal to generate a received code sequence.

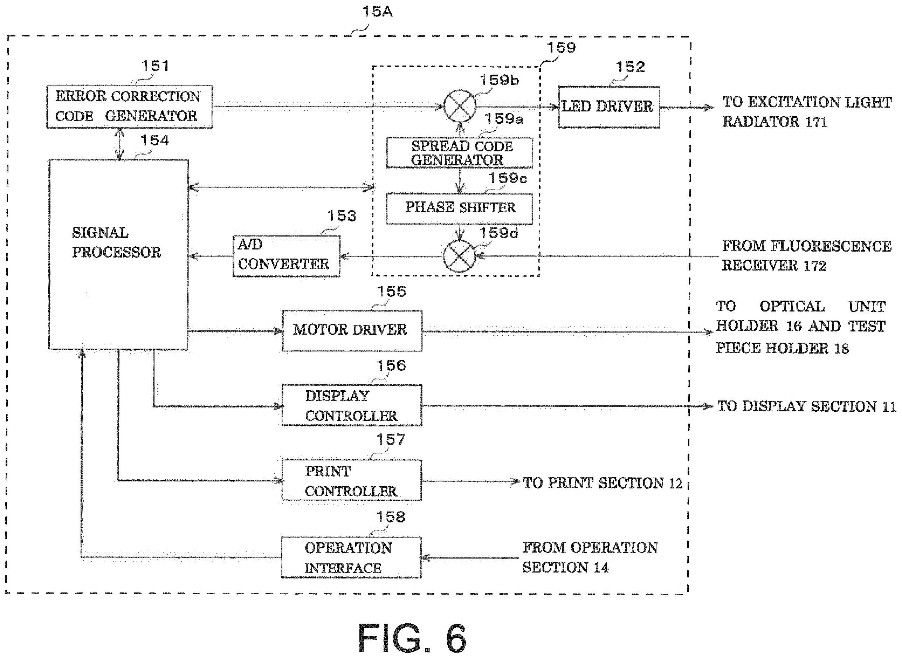

Figure 6 shows an example of the configuration of a control section 15A provided in place of the control section 15 in the case where the spreading/inverse spreading is performed as described above. In the following description, the same components as those of the control section 15 will not be described. The control section 15A includes a spread coder 159 in addition to the configuration of the control section 15, as shown in Figure 6. The spread coder 159 is provided between the error correction code generator 151 and the LED driver 152 and between the fluorescence receiver 172 and the A/D converter 153. The spread coder 159 includes a spread code generator 159a, a light-emission-side multiplier 159b, a phase shifter 159c, and a light-receiving-side multiplier 159d. The spread code generator 159a outputs a spread code sequence modulated by a spread code used in the spreading/inverse spreading to the light-emission-side multiplier 159b and the phase shifter 159c.

The light-emission-side multiplier 159b multiplies the error correction sequence output from the error correction code generator by the spread code sequence to spread the error correction sequence and supplies the LED driver 152 with the spread error correction sequence as the excitation light radiation pattern. The LED driver 152 drives the LED in the excitation light radiator 171 by using the excitation light radiation pattern to cause the LED to irradiate the test piece 2 with the excitation light.

The phase shifter 159c changes the phase of the spread code sequence as appropriate and supplies the light-receiving-side multiplier 159d with the changed spread code sequence. The light-receiving-side multiplier 159d multiplies the signal output from the fluorescence receiver 172 by the spread code sequence supplied from the phase shifter 159c to perform inverse spreading and supplies the A/D converter 153 with the result of the inverse spreading. The A/D converter 153 converts the inversely spread signal into a digital signal to generate a received code sequence.

The embodiment of the present invention has been described above, but the present invention is not limited to the examples described above. For example, the above embodiment has been described with reference to the case where the fluorescence detection system and the fluorescence detection method according to the present invention are applied to a fluorescence immunochromatographic reader. The fluorescence detection system and the fluorescence detection method according to the present invention are also applicable to other measurement apparatuses and methods in which a fluorescent substance is used as a label to detect a substance under test (ELISA, flow cytometry, for example).

Further, in the embodiment described above, a result of a qualitative evaluation of whether or not fluorescence according to the excitation light has been emitted is output as a result of the measurement. Further, in the case where fluorescence has been emitted, quantitative information on the intensity of the fluorescence may also be output as a result of the measurement. Moreover, based on the intensity of the fluorescence in the case where the decoded information sequence coincides with the transmitted information sequence, the amount of fluorescent substance and the concentration of the substance under test in the sample may be estimated and output. In an analog region that can be taken as a region where the amount (intensity) of fluorescence is sufficiently large and continuously changes, the amount of fluorescent substance and the concentration of the substance under test in the sample are proportional to the amount of fluorescence, and the proportionality constant can be determined in advance, for example, by measurement. Also in a pulse region where the amount of fluorescence is small and which cannot be taken as a region the amount of fluorescence continuously changes, the proportionality in the analog region may be applied to the pulse region to estimate the amount of fluorescent substance and the concentration of the substance under test in the sample based on the amount (intensity) of the fluorescence. The amount of fluorescent substance and the concentration of the substance under test in the sample can thus be quantified based on the intensity of received light (to be exact, the maximum or average of the intensity of received light because the fluorescence blinks) in the case where the decoded information sequence coincides with the transmitted information sequence. Based on the thus quantified value, for example, whether a disease having occurred is positive or negative may be evaluated, or a candidate who could be positive in terms of the disease but currently has a value smaller than a threshold used in the positive/negative evaluation may be identified. Further, the intensity of the fluorescence, the amount of the fluorescent substance, the concentration of the substance under test in the sample, and other types of data may be accumulated, for example, in a server.

In the embodiment described above, the fluorescence detection system includes the error correction code generator, and an error correction code coding scheme is applied to the transmitted information sequence to add a redundant bit to generate an error correction code sequence. Instead, in a case where the transmitted information sequence is fixed, no error correction code generator may be provided. In this case, for example, the transmitted information sequence and an error correction code sequence generated by coding the transmitted information sequence may be stored, for example, in a storage element in advance and may be read as required and used.

The above embodiment has been described with reference to the case where a typical test piece having the sample pad, the conjugate pad, the membrane, the absorption pad, and other components provided on the support is used. Instead, a test piece to be used may have the function of enhancing fluorescence, such as a plasmonic chip.

The above embodiment has been described with reference to the fluorescence detection system that detects fluorescence as the light stimulated by the excitation light. The light produced by the excitation light is not limited to fluorescence, and the present invention is applicable to a variety of other methods for detecting light stimulated by the excitation light. For example, the present invention is applicable to a measurement method for observing light stimulate by the excitation light, for example, Raman spectroscopy, in which Raman scattered light produced when a sample is irradiated with the excitation light is observed.

In the embodiment described above, the fluorescence detection system 1 is configured as an integrated apparatus. The fluorescence detection system 1 may instead be achieved by a combination of a plurality of apparatuses communicable with each other. For example, part of the functions of the control section 15 may be achieved, for example, by a remote server.

A person skilled in the art may add a component to the embodiment described above, omit a component therefrom, change the design of a component thereof, or combine the features of the embodiment with one another as appropriate, and such variations fall within the scope of the present invention as long as they are based on the substance of the present invention.

### Reference Sings list

- 1: Fluorescence detection system
- 11: Display section
- 12: Operation section
- 13: Insertion section
- 14: Print section
- 15: Control section
- 151: Error correction code generator
- 152: LED driver
- 153: A/D converter
- 154: Signal processor
- 155: Motor driver
- 16: Optical unit holder
- 17: Optical unit
- 171: Excitation light radiator
- 172: Fluorescence receiver
- 18: Test piece holder
- 2: Test piece

## Claims

1. A weak light detection system comprising:
an excitation light radiator that irradiates a test piece with excitation light in an excitation light radiation pattern modulated by an error correction code sequence provided by applying an error correction code coding scheme to a predetermined transmitted information sequence;
a light receiver that receives light stimulated by the excitation light at the test piece;
a received code sequence identifier that identifies a received code sequence based on a change in an intensity of the light received by the light receiver; and
a signal processor that applies an error correction code decoding scheme to the received code sequence to generate a decoded information sequence, compares the transmitted information sequence with the decoded information sequence, and determines that the test piece has emitted light according to the excitation light radiation pattern in a case where the transmitted information sequence coincides with the decoded information sequence.

2. The weak light detection system according to claim 1, further comprising an error correction code generator that generates the error correction code sequence by applying the error correction code coding scheme to the transmitted information sequence to add a redundant bit.

3. The weak light detection system according to claim 1 or 2, further comprising a spread coder that spreads the error correction code sequence by using a spread code, wherein
the excitation light radiator irradiates the test piece with the excitation light in an excitation light radiation pattern produced by the spread coder's spreading of the error correction code sequence with the spread code.

4. The weak light detection system according to claim 3, wherein
the spread coder performs inverse spreading using the spread code on a signal output from the light receiver, and
the received code sequence identifier identifies the received code sequence based on the signal output from the light receiver and inversely spread by the spread coder.

5. The weak light detection system according to any of claims 1 to 4, further comprising an estimator that estimates an amount of a substance under test or a substance to be excited contained in the test piece based on the intensity of the light received by the light receiver in a case where the signal processor determines that light emission has occurred.

6. A weak light detection method comprising the steps of:
irradiating a test piece with excitation light in an excitation light radiation pattern modulated by an error correction code sequence provided by applying an error correction code coding scheme to a predetermined transmitted information sequence;
receiving light stimulated by the excitation light at the test piece;
identifying a received code sequence based on a change in an intensity of the light received in the light reception step;
applying the error correction code decoding scheme to the received code sequence to generate a decoded information sequence; and
comparing the transmitted information sequence with the decoded information sequence and determining that the test piece has emitted light according to the excitation light radiation pattern in a case where the transmitted information sequence coincides with the decoded information sequence.

7. The weak light detection method according to claim 6, further comprising the step of generating the error correction code sequence by applying the error correction code coding scheme to the transmitted information sequence to add a redundant bit.

8. The weak light detection method according to claim 6, wherein, in the irradiation step, the test piece is irradiated with the excitation light in an excitation light radiation pattern produced by spreading of the error correction code sequence with a spread code.

9. The weak light detection method according to claim 8, further comprising the step of performing inverse spreading using the spread code on a signal based on the change in the intensity of the light received in the light reception step, wherein
in the step of identifying the received code sequence, the received code sequence is identified based on the signal inversely spread in the step of performing the inverse spreading.

10. The weak light detection method according to any one of claims 6 to 9, further comprising the step of estimating an amount of a substance under test or a substance to be excited contained in the test piece based on the intensity of the light received in the light reception step in a case where it is determined in the determination step that light emission has occurred.
